# EUROPÄISCHE PATENTANMELDUNG

(11) **EP 1 804 055 A1**
(43) Veröffentlichungstag der Anmeldung: **04.07.2007**
(21) Anmeldenummer: 06024679.0
(22) Anmeldetag: 29.11.2006
(51) Int. Cl.: G01N 21/90, B07C 5/34

(54) **Vorrichtung zum Inspizieren von Etiketten auf Gefässen**

(30) Priorität: 30.12.2005 DE 202005020478 U
(71) Anmelder: KRONES Aktiengesellschaft, 93073 Neutraubling (DE)
(72) Erfinder: Lindner, Peter, 84085 Langquaid (DE)

(57) **Zusammenfassung**

Die Erfindung betrifft eine Vorrichtung zum Inspizieren von Etiketten auf Gefäßen oder dgl. Gegenstände mit einer Kamera zum Abbilden der mit Etiketten bestückten Gefäßfläche, wobei zwischen der Kamera und dem Gefäß eine optische Einrichtung angeordnet ist, die umfänglich und/oder übereinander mit Zwischenabstand versetzt angeordnete Etiketten erfassende Strahlengänge erzeugt.

## Beschreibung

Die Erfindung betrifft eine Vorrichtung zum Inspizieren von Etiketten auf Gefäßen oder dgl. Gegenstände gemäß dem Oberbegriff des Anspruchs 1.

Inspektionsvorrichtungen dieser Art werden häufig in der Lebensmittel- und Getränketechnik, sowie der pharmazeutischen Industrie verwendet, um in Abfüll- und Verpackungsanlagen das Vorhandensein, sowie den korrekten Sitz von Etiketten und auch die Etikettenoberfläche selbst mit Aufdruck und ggf. darauf vorhandenen Datierungen und/oder Codes zu überprüfen, bevor etikettierte Artikel in den Verbraucherkreislauf gelangen (JP 6-186002 A). In Abfülllinien für Getränke beispielsweise erfolgt eine solche Etikettenkontrolle in der Regel unmittelbar nach dem Aufbringen der Etiketten auf eine Flasche oder dgl. bevorzugt noch innerhalb der Etikettiermaschine (US 2005/0188655 A1), wo die beispielsweise auf eine Flaschenmantelfläche aufgebrachten Etiketten in einer exakten Ausrichtposition einer Kamera präsentiert werden können, die mindestens eine Abbildung der dargebotenen Flaschenmantelfläche erzeugt und mit bekannten Auswertverfahren die in der Gesamtabbildung enthaltenen Etiketten analysiert.

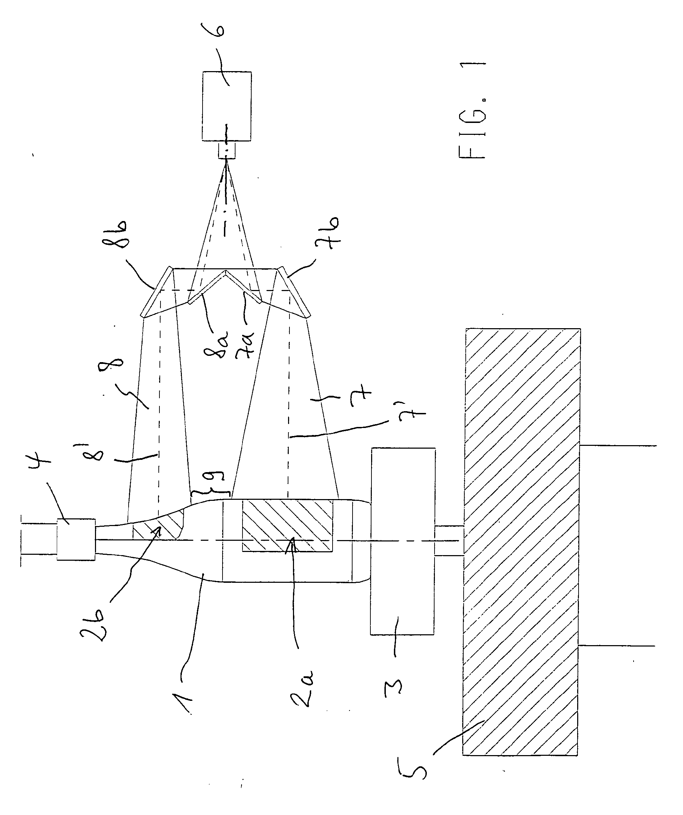

Häufig befinden sich auf einer Flasche zwei oder mehr Etiketten übereinander entlang der Flaschenachse mit Zwischenabstand versetzt an der Mantelfläche. Aus diesem Grund muss die Kamera so eingerichtet sein, dass sie die Flasche in diesem Bereich über ihre gesamte Höhe vollständig erfassen kann, damit die Abbildung alle vorhandenen Etiketten beinhaltet. Daraus resultiert der Nachteil, dass die für die interessierenden Etikettenbereiche in der Abbildung zur Verfügung stehende Auflösung im Verhältnis zur insgesamt von der Kamera bereitgestellten Bildauflösung reduziert ist, weil ein Teil davon für die nicht etikettierten Mantelflächenbereiche in der Kameraabbildung ungenutzt bleibt. Dieses Problem tritt speziell bei großen Flaschen, beispielsweise Sektflaschen auf. Auch bei umfänglich versetzten Etiketten besteht die vorhergehend beschriebene Problematik in Bezug auf die Ausnutzbarkeit der zur Verfügung stehenden Bildauflösung der Kamera.

Der Erfindung liegt die Aufgabe zugrunde, eine diesbezüglich verbesserte Vorrichtung zur Etiketteninspektion anzugeben.

Gelöst wird diese Aufgabe durch die kennzeichnenden Merkmale des Anspruchs 1.

Durch die erfindungsgemäße vorgeschlagene Lösung wird vorteilhafterweise die von der Kamera bereitgestellte Auflösung weitestgehend tatsächlich zur Inspektion der etikettierten Mantelflächenbereiche genutzt, so dass die Etikettenfläche mit sehr hoher Auflösung abgebildet und mit hoher Genauigkeit ausgewertet werden kann. Nur ein verhältnismäßig geringer Teil der Abbildungsfläche bleibt ggf. für nicht etikettierte Flächenanteile ungenutzt. Diese Lösung ist zudem erheblich kostengünstiger als der Einsatz mehrerer Kameras, um jedes Etikett mit hoher Auflösung einzeln für sich mit jeweils einer eigenen Kamera zu erfassen und bietet zudem den Vorteil, dass eine Etikettenversatzkontrolle bei übereinander positionierten Etiketten damit erheblich leichter und mit höherer Genauigkeit ausführbar ist als bei Verwendung mehrerer Kameras mit jeweils separaten Etikettenabbildungen.

Bevorzugt wird die neuerungsgemäße optische Einrichtung zwischen der für mehrere Etiketten gemeinsamen Kamera und dem abzubildenden Gefäß durch mehrere vorzugsweise ebene Spiegel gebildet. Deren Position in Bezug auf ihre Umfangs- und/oder Höhenlage sowie Neigung relativ zur Gefäßhochachse ist bevorzugt durch eine einstellbare Halterung justierbar, so dass problemlos nicht nur eine Anpassung an eine bestimmte Etikettierung, sondern erforderlichenfalls auch eine Umstellung auf verschiedene Gefäße bzw. unterschiedliche Etikettierungen möglich ist. Hierfür kann bevorzugt eine über eine speicherprogrammierbare Steuerung betätigbare motorische Verstellung der Halterung für die Spiegel erfolgen.

Bevorzugt werden nur die für eine Inspektion interessierenden Etikettenflächen von der optischen Einrichtung unter Ausnutzung der zur Verfügung stehenden Auflösung auf eine Kamera projiziert, während alle übrigen Mantelflächenabschnitte außer Betracht bleiben.

Nachfolgend wird ein bevorzugtes Ausführungsbeispiel anhand einer Figur erläutert. Die Darstellung zeigt eine Vorrichtung für eine Etiketteninspektion von etikettierten Flaschen innerhalb einer Etikettiermaschine in einer Seitenansicht.

Von der Etikettiermaschine ist die äußere Peripherie eines Karussells 5 in einem teilweisen Vertikalschnitt in Förderrichtung gesehen dargestellt, das an seinem Umfang mehrere in gleichmäßigen Teilungsabständen auf einem gemeinsamen Teilkreis angeordnete Drehteller 3 trägt. Jeder dieser Drehteller 3 ist in an sich bekannter Weise während der kontinuierlichen Umlaufbewegung des Karussells 5 um eine zur Drehtellerachse parallel versetzte Karusselldrehachse durch nicht gezeigte Kurvensteuereinrichtungen oder programmgesteuerte Antriebe, wie z.B. Servo-, Schrittmotoren oder andere Antriebseinrichtungen in Abhängigkeit der momentanen Drehstellung des Karussells 5 programmgesteuert um seine vertikale Achse drehbar.

Auf den Drehtellern 3 befindet sich jeweils eine mit ihrer Hochachse fluchtend zur Drehachse des jeweiligen Drehtellers 3 ausgerichtete Flasche 1, wobei die Flasche in einer axialen Einspannung zwischen dem bodenseitig angreifenden Drehteller 3 und einer am Kopfstück der Flasche angreifenden, frei drehbar gelagerten Zentrierglocke 4 axial eingespannt gehalten ist.

In Umlaufrichtung des Karussells 5 gesehen im Bereich nach einer auf eine Flasche 1 ein Rumpfetikett 2a und ein Brustetikett 2b auftragenden Etikettierstation (nicht dargestellt) befindet sich an der radial äußeren Seite der Umlaufbahn der Flaschen 1 bzw. des Karussells 5 wenigstens eine stationär angeordnete CCD-Kamera 6 mit einer eine bestimmte Auflösung aufweisenden Flächenmatrix und einer integrierten Auswertelektronik mit spezieller Bildverarbeitungssoftware zur Überprüfung der Etiketten auf der etikettierten Flasche 1, die mit ihren Etiketten 2a,2b mittig radial nach außen zur Kamera 6 weisend ausgerichtet ist.

Im Bereich zwischen der Kamera 6 und einer dieser in Richtung der optischen Kameraachse gegenüberliegenden Flasche 1 befindet sich eine optische Anordnung in Form von vier ebenen Spiegeln 7a,7b,8a,8b zur Erzeugung eines unteren Strahlenganges 7 und eines oberen Strahlenganges 8. Mit dem unteren Strahlengang 7 wird ausschließlich der Flaschenmantelbereich einer Flasche 1 erfasst, in dem sich normalerweise das Rumpfetikett 2a befindet, während der obere Strahlengang 8 den Flaschenmantelbereich erfasst, in dem das Brustetikett 2b vorhanden sein sollte. Alle übrigen Bereiche der äußeren Flaschenmantelfläche, insbesondere der zwischen dem Rumpfetikett 2a und dem mit Abstand darüber angeordneten oberen Brustetikett 2b vorhandene, etikettenfreie Zwischenbereich 9, sowie die unterhalb des Rumpfetiketts 2a und oberhalb des Brustetiketts 2b liegenden Mantelflächenbereiche, werden weitgehend nicht erfasst und beanspruchen daher keinen nennenswerten Anteil der vorhandenen Kameraauflösung.

Beide Etikettenabbildungen liegen auf der rechteckigen Kameramatrix unmittelbar übereinander. Die von der Kamera gelieferte Gesamtabbildung beinhaltet im Wesentlichen - bis auf eine auf ein unvermeidliches Minimum reduzierte Restfläche - nur Etikettenflächen, d.h. die zur Verfügung stehende Bildauflösung wird optimal ausgenutzt und ermöglicht eine hohe Erkennungssicherheit.

Die Position, Ausrichtung und Abmessungen der Spiegel 7b,8b sind so gewählt, dass die optische Achse 7' bzw. 8' des oberen bzw. unteren Strahlengangs 7,8 jeweils annähernd mittig auf das zugeordnete Etikett trifft. Die Spiegel 7b,8b lenken die Strahlengänge 7,8 durch Reflexion in Richtung zu einem dazwischen angeordneten Spiegelpaar 7a,8a um, das im dargestellten Ausführungsbeispiel zueinander dachförmig angestellt vor der Kameraachse positioniert ist und die beiden Strahlengänge zum Kameraobjektiv konvergierend verlaufend umlenkt. Es versteht sich, dass an Stelle von Spiegeln auch andere optische Mittel wie Prismen, Lichtleiter o.ä. zur Erzielung einer vergleichbaren Abbildung in Betracht gezogen werden können. Zur Festlegung der räumlichen Lage der Spiegel und Kamera sind vorzugsweise verstellbare Halterungen in Form von Stativen oder dgl. (nicht dargestellt) verwendbar, die eine abgeschlossene, insgesamt wechselbare Einheit bilden können.

Die Bildaufnahme erfolgt während der kontinuierlichen Förderbewegung in dem Augenblick, wenn eine Flasche 1 mit ihrer Hochachse in etwa die optische Achse der Strahlengänge kreuzend ausgerichtet ist. Dies geschieht in Verbindung mit einem Drehgeber der Etikettiermaschine, der ein Stellungssignal an die Kamerasteuerung liefert.

Die vorhergehend beschriebene optische Anordnung kann auch in Verbindung mit einer mehrere umfänglich versetzte Abbildungen einer Flasche erzeugenden Inspektionseinrichtung, z.B. entsprechend WO 95/04267 A1, zum Einsatz kommen, um dort in jeder Einzelabbildung (Strahlengang) den gleichen, Auflösung sparenden Effekt bei einer Etiketten- oder Aufdruckkontrolle zu erreichen. Sie muss hierzu lediglich im Bereich vor der Kamera angeordnet sein, wo die umfänglich versetzten Strahlengänge zur Kamera konvergierend einlaufen.

Der vorhergehend verwendete Begriff "Etiketten" ist nicht auf Trägermaterial (Papier, Kunststoff- oder Metallfolie) aufgebrachte, optisch wahrnehmbare Informationen oder Motive beschränkt, sondern umfasst auch solche, die unmittelbar auf Gefäße oder sonstige Artikel aufgetragen sind.

## Patentansprüche

1. Vorrichtung zum Inspizieren von Etiketten auf Gefäßen oder dgl. Gegenstände mit einer Kamera zum Abbilden der mit Etiketten bestückten Gefäßfläche, **dadurch gekennzeichnet, dass** zwischen der Kamera und dem Gefäß eine optische Einrichtung angeordnet ist, die umfänglich und/oder übereinander mit Zwischenabstand versetzt angeordnete Etiketten erfassende Strahlengänge erzeugt.

2. Vorrichtung nach Anspruch 1, **dadurch gekennzeichnet, dass** die optische Einrichtung aus Spiegeln gebildet wird, vorzugsweise ebenen Spiegeln.

3. Vorrichtung nach Anspruch 1 oder 2, **dadurch gekennzeichnet, dass** die optische Einrichtung an die Position der Etiketten anpassbar ist.

4. Vorrichtung nach Anspruch 2 und 3, **dadurch gekennzeichnet, dass** die Spiegel bezüglich ihrer Umfangs- und/oder Höhenposition und/oder Neigung einstell- und/oder umstellbar sind.

5. Vorrichtung nach wenigstens einem der Ansprüche 1 bis 4, **dadurch gekennzeichnet, dass** die optische Einrichtung so ausgestaltet ist, dass die von ihr gebildeten Strahlengänge im Wesentlichen nur die für eine Inspektion interessierenden Etikettenflächen auf die Kamera projizieren.
